# EUROPÄISCHE PATENTSCHRIFT

(11) **EP 1 233 853 B1**
(45) Veröffentlichungstag und Bekanntmachung des Hinweises auf die Patenterteilung: **26.04.2006**
(21) Anmeldenummer: 00983132.2
(22) Anmeldetag: 14.11.2000
(51) Int. Cl.: B27D 5/00, B32B 21/00, B29C 63/00, B27G 11/00

(54) **VERFAHREN ZUM ANHAFTEN EINES DECKMATERIALS AN WERKSTÜCKOBERFLÄCHEN VON FORTLAUFEND BEWEGTEN ODER STATIONÄR ANGEORDNETEN PLATTEN- ODER LEISTENFÖRMIGEN WERKSTÜCKEN**
METHOD FOR ADHERING A COVERING MATERIAL TO SURFACES OF PLATE- OR STRIP-FORMED WORKPIECES THAT ARE CONTINUALLY MOVED OR ARRANGED IN A STATIONARY MANNER
PROCEDE POUR FAIRE ADHERER UN MATERIAU DE RECOUVREMENT SUR DES SURFACES DE PIECE EN FORME DE PLAQUES OU DE BAGUETTES, SE DEPLA ANT EN CONTINU OU FIXES

(30) Priorität: 18.11.1999 DE 19955575
(43) Veröffentlichungstag der Anmeldung: 28.08.2002
(73) Patentinhaber: Brandt Kantentechnik GmbH, 32657 Lemgo (DE)
(72) Erfinder: FÜSSEL, Carsten, 31789 Hameln (DE); FRANZ, Karl-Bernhard, 32657 Lemgo (DE); GARNJOST, Ralf, 32791 Lage (DE)
(74) Vertreter: HOFFMANN EITLE
(86) Internationale Anmeldenummer: PCT/EP2000/011256
(87) Internationale Veröffentlichungsnummer: WO 2001/036168

(56) Entgegenhaltungen:
- EP-A- 0 897 781
- WO-A-99/48683
- DE-A- 1 453 258
- DE-A- 2 722 414
- DE-A- 3 415 747
- DE-A- 4 422 449
- DE-U- 7 517 104
- DE-U- 29 819 350
- US-A- 1 891 430
- US-A- 4 194 618

## Beschreibung

### TECHNISCHES GEBIET

Die vorliegende Erfindung betrifft ein Verfahren zum Anhaften, insbesondere Ankleben, eines Deckmaterials an Werkstückoberflächen von fortlaufend bewegten oder stationär angeordneten platten- oder leistenförmigen Werkstücken, insbesondere aus Holzwerkstoffen oder dergleichen.

### STAND DER TECHNIK

Aus der Fachzeitschrift "Werkstoffe in der Fertigung", ISSN 0939-2629, Ausgabe 3/1999 (Juni 1999), Titel: "Das hält mit Sicherheit", Untertitel: "tesa hitzeaktivierbare Folien (HAF) sind die richtige Verbindung für jeden Einsatz", ist ein Verfahren zum Verkleben von Bauteilen mittels einer hitzeaktivierbaren Folie (HAF) sowie eine hitzeaktivierbare Folie zur Durchführung dieses Verfahrens bekannt. Die hitzeaktivierbare Folien mit der Typenbezeichnung HAF 8401, 8410, 8420 und 8490 sind Folien auf Phenolharzbasis, die einseitig mit einem Trennpapier abgedeckt in Rollenform bereitgestellt werden. Die HAF-Folien werden erst bei Erwärmung klebrig und befinden sich dann in einem hitzeaktivierten Zustand. Zum Verkleben vom zwei Werkstücken, z.B. eines Reibbelags und eines Kupplungsträgers, wird die hitzeaktivierbare Folie zunächst auf die benötigten Abmessungen gestanzt bzw. zugeschnitten. Dann wird die HAF-Folie auf die vorgewärmte Fügefläche des ersten Werkstücks vollflächig und luftblasenfrei aufgebracht, wodurch die HAF-Folie an diesen Bauteil anhaftet. Das so vorkonfektionierte Werkstück kann anschließend direkt weiterverarbeitet oder zunächst zwischengelagert werden. Zur Herstellung einer Verbindung mit dem zweiten Werkstück wird das Trennpapier von der bereits auf dem vorkonfektionierten ersten Werkstück befindlichen HAF-Folie abgezogen und die beiden Teile zusammengefügt. Der Aktivierungsvorgang der HAF-Folie erfolgt unter Hitzeeinwirkung. Hierzu werden zwei externe Heizeinrichtungen jeweils an die zu verbindenden Werkstücke, zwischen denen sich die zu aktivierende HAF-Folie befindet, angelegt. Unter Hitzeeinwirkung wird der Klebstoff aktiviert, härtet aus und verbindet die Werkstücke. Bei den genannten Folien auf Phenolharzbasis wird für diesen Vorgang zusätzlich ein Anpreßdruck benötigt. Als weitere Einsatzgebiete für die HAF-Folien wird das Verkleben von Magneten in Elektromotorgehäusen, das Verkleben von Schleifkörpern auf Stahltellern, das Verkleben von Filtern in Filteranlagen, die Herstellung von Snowboards und Skiern, das Verbinden von festen mit flexiblen Leiterplatten, das Implantieren von Mikrochips in Chipkarten, das endlose Verbinden von Rollenmaterial, z.B. Glasfasergewebe oder Aluminiumblech, und die Anwendung bei der Herstellung von Autoarmaturenbrettern genannt.

Verfahren die Umleimer, also bereits mit einem Klebstoff vorbehandelte Beschichtungsmaterialien, bei denen es sich üblicherweise um relativ schmale Kantenstreifen handelt, verarbeiten, sind hinsichtlich ihrer Einsatzmöglichkeiten relativ beschränkt, da für Umleimer sowohl aus fertigungs- als auch verarbeitungstechnischen Gründen nur ganz bestimmte Klebstofftypen verwendet werden können, mit denen wiederum nur bestimmte Klebeeigenschaften erzielbar sind. Für diverse Werkstoffe und Werkstoffkombinationen sowie für Werkstücke, die besondere Oberflächeneigenschaften besitzen, ist die mit Umleimern erreichbare Klebewirkung sowie die damit zusammenhängende Qualität der Deckmaterialverbindung nicht zufriedenstellend. Für diese Fälle sind Umleimer daher nicht oder nur mit erheblichen Einschränkungen verwendbar. Auch ist die Verarbeitungsgeschwindigkeit von Umleimern begrenzt.

Aus der WO 99/48683-A ist ein Verfahren zum Anhaften eines Deckmaterials an Werkstückoberflächen von platten-oder leistenförmigen Werkstücken mit folgenden Schritten bekannt:
Bereitstellen von mindestens einem band- oder streifenförmigen Haftelement, das mit einem aktivierbaren Haftmittel versehen ist,
Fördern des Haftelementes zwischen das Deckmaterial und die Werkstückoberflächen,
zumindest teilweises Aktivieren des Haftmittels, und
Zusammenführen des Deckmaterials und der Werkstückoberflächen mit dem dazwischenliegenden Haftelement zum Zwecke der Herstellung einer haftenden Verbindung zwischen dem Deckmaterial und den Werkstückoberflächen

Aus der DE 44 22 449-A ist ein Verfahren zum Anhaften eines Deckmaterials an Werkstückoberflächen von fortlaufend bewegten, platten-oder leistenförmigen Werkstücken mit folgenden Schritten bekannt:
Bereitstellen von mindestens einem band- oder streifenförmigen Haftmittel-Trägerelement, das mit einem Haftmittel versehen ist,
fortlaufendes Übertragen des Haftmittels von dem Haftmittel-Trägerelement auf das Deckmaterial und damit fortlaufendes Fördern des Haftmittels zwischen das Deckmaterial und die sich fortbewegenden Werkstückoberflächen und
fortlaufendes Zusammenführen des Deckmaterials und der Werkstückoberflächen mit dem dazwischenliegenden Haftmittel, zum Zwecke der Herstellung einer haftenden Verbindung zwischen dem Deckmaterial und den Werkstückoberflächen.

### DARSTELLUNG DER ERFINDUNG

Der Erfindung liegt die Aufgabe zugrunde, ein geeignetes Verfahren zum Anhaften eines Deckmaterials an Werkstückoberflächen von fortlaufend bewegten platten- oder leistenförmigen Werkstücken zu schaffen, das die dem Stand der Technik innewohnenden Nachteile möglichst weitgehend vermeidet und auf vergleichsweise einfache und effektive Art und Weise die Herstellung einer sicheren haftenden Verbindung zwischen Deckmaterial und Werkstückoberflächen ermöglicht.

Diese Aufgabe wird gemäß einer ersten und einer zweiten Verfahrensweise mit den Merkmalen des Anspruchs 1 bzw. 2 gelöst.

Die zuvor genannten Verfahrensweisen gemäß den Ansprüchen 1 bzw. 2 können zur Bearbeitung eines einzelnen Werkstücks bzw. einer gesamten Werkstückserie auch kombiniert werden.

Bei den mit den erfindungsgemäßen Verfahren zu bearbeitenden Werkstücken handelt es sich vorzugsweise um Teile aus Holzwerkstoffen, wie z.B. Vollhölzer, Leimhölzer, Schichthölzer, Holz- oder Preßspanplatten oder dergleichen. Das Werkstückmaterial kann zudem vollständig oder teilweise offenporige, poröse, bröckelige, unregelmäßige oder raue Oberflächenstrukturen aufweisen und/oder mehr oder weniger körnige Werkstoffpartikel umfassen. Die Werkstücke sind jedoch nicht ausschließlich auf Holzwerkstoffe beschränkt.

Grundsätzlich können auch Werkstücke aus Kunststoff, Metall, Glas, Keramik, Stein usw. sowie entsprechende Verbundwerkstoffe verarbeitet werden. Das Material des Werkstückes kann sich überdies weitgehend in einem Rohzustand befinden oder aber zumindest teilweise vorbehandelt sein.

Unter Werkstückoberflächen sind nicht nur Schnitt- oder Bearbeitungskanten, Kantenflächen oder Schmalflächen, sondern auch großflächige Bereiche der Werkstücke zu verstehen. Die Werkstückoberflächen können eben, geradlinig, oder auch krummeinig und/oder profiliert sein. Die Werkstückoberflächen können von der Beschaffenheit des Werkstückmaterials her sowohl naturbelassen als auch (beispielsweise abhängig von Oberflächenqualität und/oder der Festigkeit) vorbehandelt oder bereits vorvergütet sein.

Als Deckmaterial können dünne Kantenstreifen, Folien, Bänder, Platten aus einem natürlichen oder künstlichen Material, wie z.B. Echtholzfurniere, Kunststoff-Furniere, usw. , aber auch massivere Teile wie z.B. Kanthölzer, Bohlen, Profilhölzer und dergleichen dienen. Die Breite des Deckmaterials kann je nach Anwendungsfall wenige Millimeter bis zu mehrere Meter betragen.

Unter einem band- oder streifenförmigen Haftelement sind im Sinne der Erfindung auch Folien, Platten sowie seil- oder fadenartige Elemente zu verstehen. Die Breite eines Haftelementes kann je nach Anwendungsfall von wenigen Millimetern bis zu mehreren Metern variieren. Die Länge des Haftelementes kann endlich oder endlos sein. Die Dicke des Haftelementes liegt abhängig vom jeweiligen Einsatzzweck und der Oberflächenbeschaffenheit von Werkstückoberfläche und Deckmaterial im Bereich von Mikrometern bis Millimetern. Das Haft-mittel des Haftelementes ist vorzugsweise in eine geeignete Matrix eingebettet. Die Geometrie eines jeweiligen Haftmittelelementes ist vorzugsweise regelmäßig; es ist jedoch durchaus denkbar, ein Haftmittelelement mit einer örtlich unterschiedlichen Formgebung zu verwenden. Das. Haftelement selbst kann ein- oder mehrteilig bzw. ein- oder mehrschichtig ausgebildet sein und eine glatte und/oder mit einer Struktur und/oder Textur versehene Oberfläche aufweisen. Das Haftelement kann im aktivierten Zustand des Haftmittels nur eine haftwirksame Seite oder, im Falle einer doppelseitigen Ausführung, auch zwei haftwirksame Seiten besitzen. Es ist zudem möglich, dass das Haftelement nicht nur eine flache, im wesentlichen geradlinige Querschnittsform, sondern auch eine profilierte Querschnittsform aufweist, was eine leichtere Anpassung des Haftelementes an profilierte Werkstück- und/oder Deckmaterialbereiche gestattet. Nach dem Zusammenfügen von Deckmaterial und Werkstück verbleibt das Haftelement permanent zwischen diesen beiden Teilen. Die Abmessungen des Haftelementes sind vorzugsweise auf die Abmessungen der mit dem Deckmaterial zu beschichtenden Werkstückoberfläche und/oder des Deckmaterials abgestimmt. Es ist indes auch denkbar, dass das Haftelement nach Fertigstellung der haftenden Verbindung zwischen Deckmaterial und Werkstückoberfläche zumindest teilweise über das fertige Werkstück übersteht und die überstehenden Bereiche erst nachfolgend entfernt werden. Obwohl sich das Haftelement als solches in einem festen Aggregatzustand befindet, kann es durchaus Bestandteile bzw. Komponenten enthalten, die sich gegebenenfalls in einem anderen Aggregatzustand befinden. Das Haftelement kann ferner einen Vorlaufabschnitt besitzen, der nicht mit dem Haftmittel versehen ist. Überdies kann das Haftelement mit einer eine Schutzfolie ausgestattet sein, die unmittelbar vor der Verarbeitung des Haftelementes entfernt wird. Eine solche Schutzfolie ist jedoch nicht zwingend erforderlich.

Bei einem Haftmittel-Trägerelement handelt es sich im Sinne der Erfindung um ein Element, das an der eigentlichen Haftverbindung zwischen Deckmaterial und Werkstückoberfläche nicht selbst teilnimmt, sondern das lediglich dazu dient, das Haftmittel direkt und/oder indirekt auf die Werkstückoberfläche und/oder das Deckmaterial zu übertragen und damit letztendlich das Haftmittel zwischen die Werkstückoberfläche und das Deckmaterial zu bringen. Hinsichtlich der möglichen Ausgestaltung bzw. bezüglich der Geometrie und Abmessung des Haftmittel-Trägerelementes wird auf die vorangegangenen Ausführungen zum Haftelement verwiesen, die analog anwendbar sind. Nach dem zusammenfügen von Deckmaterial und Werkstück verbleibt lediglich das Haftmittel in Form einer Haftmittelschicht permanent zwischen diesen beiden Teilen. Das verbrauchte Trägerelement wird entsorgt oder einer Wiederverwertung zugeführt. In Verbindung mit einem mit Hilfe eines Haftmittel-Trägerelementes aufgebrachten Haftmittels kann auch ein band- oder streifenförmiges Hilfselement eingesetzt werden, welches im Durchlauf zwischen das Deckmaterial und die Werkstückoberfläche gebracht wird und beispielsweise zum Überbrücken von Oberflächenunebenheiten oder dergleichen dient. Obwohl sich das Haftmittel-Trägerelement als solches in einem festen Aggregatzustand befindet, kann es durchaus Bestandteile bzw. Komponenten enthalten, die sich gegebenenfalls in einem anderen Aggregatzustand befinden. Das Haftmittel-Trägerelement kann ferner einen Vorlaufabschnitt besitzen, der nicht mit dem Haftmittel versehen ist. Überdies kann das Haftmittel-Trägerelement mit einer Schutzfolie ausgestattet sein, die unmittelbar vor der Verarbeitung des Haftmittel-Trägerelementes entfernt wird. Eine solche Schutzfolie ist jedoch nicht zwingend erforderlich.

Unter einem aktivierbares Haftmittel wird ein Haftmittel, insbesondere Klebemittel verstanden, das aus einer oder mehreren Komponenten bestehen kann und das sich zunächst in einem deaktivierten Zustand befindet, in dem es keine Haft- oder Klebewirkung besitzt, jedoch in einen Zustand versetzt werden kann, in dem es eine gewünschte Haft- oder Klebewirkung entfaltet.

Unter einem Aktivieren des Haftmittels ist nicht nur ein vollständiges oder teilweise Aktivieren, sondern auch ein Reaktivieren eines bereits vorhergehend mindestens einmal aktivierten Haftmittels zu verstehen. Das Aktivieren kann je nach Haftmitteltyp also grundsätzlich ein- oder mehrmals erfolgen. Eine teilweise Aktivierung liegt beispielsweise dann vor, wenn das Haftmittel noch nicht seine vollständige Haftwirkung entfaltet oder aber, wenn es seine eingeschränkte und/oder vollständige Haftwirkung nur an bestimmten Teilbereichen des Haftelementes bzw. des Haftmittel-Trägerelementes (beispielsweise vorerst nur einer Seite des Haftelementes) und/oder der Werkstückoberfläche und/oder des Deckmaterials zeigt.

Es wird an dieser Stelle nochmals explizit darauf hingewiesen, dass die in den Ansprüchen genannte Auflistung der einzelnen Verfahrensschritte der erfindungsgemäßen Verfahren nicht die zwangsläufige Reihenfolge dieser Schritte festlegt. Die tatsächliche Reihenfolge kann je nach Verfahrensvariante erheblich variieren. Beispielsweise ist es möglich, den Schritt c) vor, während oder nach dem Schritt b) auszuführen. Auch kann der Schritt b) während des Schrittes d) erfolgen. Auf das besondere Verhältnis des Schrittes c) zum Schritt d) wird nachfolgend noch detaillierter eingegangen werden. Ferner kann der Schritt w) vor, während oder nach dem Schritt x) erfolgen. Zu dem besonderen Verhältnis des Schrittes w) zum Schritt x) wird nachfolgend noch ausführlicher Stellung genommen werden.

Obwohl es sich bei den erfindungsgemäßen Verfahren als nicht notwendig erwiesen hat, ist es möglich, das Haftelement vor dem Schritt c) zunächst provisorisch an dem Deckmaterial und/oder der Werkstückoberfläche zu fixieren. Dies kann beispielsweise durch ein separates Zusatzhaftmittel, eine mechanische Fixierung, z.B. durch Hineindrücken von Teilen des Haftelementes in das Werkstück, oder dergleichen erfolgen. Sofern mindestens zwei Haftmittel-Trägerelemente verwendet werden, die jeweils mit einem aktivierbaren Haftmittel versehen sind, kann vor dem Schritt c) entsprechend wenigstens eines der Haftelemente zunächst provisorisch an dem Deckmaterial und/oder der Werkstückoberfläche fixiert werden wird.

Bei den erfindungsgemäßen Verfahren wird also das zur Herstellung einer sicheren und soliden Haftverbindung benötigte Haftmittel separat in Form eines in seinem Ausgangszustand zunächst nicht haftenden und damit leicht zu handhabenden, zu transportierenden und zu lagernden flächigen Gegenstandes, nämlich in Form des Haftelementes oder des Haftmittel-Trägerelementes, bereitgestellt und zum Zwecke des Verbindens von Deckmaterial und Werkstückoberfläche erst zu einem geeigneten Zeitpunkt und an einem geeigneten Ort gezielt aktiviert, wodurch die gewünschte Haftwirkung erzeugt wird. Bereits mit einem Klebemittel vorbeschichtete Umleimer oder mehr oder weniger flüssige Klebstoffe, die in diesem Zustand auf das Werkstück und/oder das Deckmaterial aufgetragen werden müssen, kommen bei den erfindungsgemäßen Verfahren nicht zur Anwendung. Komplizierte und störanfällige, mit Klebemittelauftragsrollen, Auftragsdüsen oder dergleichen ausgestattete Klebemittelauftragseinrichtungen, wie sie von konventionellen Verfahren und Vorrichtungen her bekannt sind, können daher entfallen. Unerwünschte Klebemittelverluste durch Leckagen sowie die damit verbundene Verschmutzung wesentlicher, an der Ausführung des Verfahrens beteiligter Vorrichtungskomponenten und deren Umgebung, treten bei den erfindungsgemäßen Verfahren folglich nicht auf.

Selbst im Stand-by-Betrieb, bei regulären Abschaltungen oder im Falle einer Fehlfunktion durch einen Abriss des Deckmaterials, des Haftelementes oder des Haftmittel-Trägerelementes kann es somit nicht zu unerwünschten Haft- bzw. Klebemittelverlusten kommen. Auch ein etwaiger Austausch oder Wechsel der bei den erfindungsgemäßen Verfahren verwendeten Haftelemente oder Haftmittel-Trägerelemente lässt sich sauber, problemlos und rasch durchführen. Gegenüber vorbekannten Verfahren, die Heiß- oder Schmelzkleber verarbeiten, ist eine Brandgefahr nahezu ausgeschlossen. Ferner unterliegen die bei den erfindungsgemäßen Verfahren an der Herstellung der Haftverbindung beteiligten Vorrichtungskomponenten nur einem vergleichsweise geringen Verschleiß, was die Standzeit dieser Komponenten vorteilhaft erhöht. Aufwendige Service- und Reinigungsarbeiten sind daher nicht erforderlich. Wartungszeiten und Wartungskosten sowie Aufwendungen für Ersatzteile lassen sich demzufolge erheblich reduzieren. Auch können die Neben- oder Stillstandszeiten gesenkt und damit die Produktivität und Wirtschaftlichkeit erhöht werden.

Da bei dem erfindungsgemäßen Verfahren die Haftelemente oder Haftmittel-Trägerelemente zweckmäßigerweise nur soviel Haftmittel mit sich führen und direkt und/oder indirekt zu den zu verbindenden Bereichen von Deckmaterial und Werkstückoberfläche transportieren, wie im wesentlichen tatsächlich benötigt wird, entsteht im Gegensatz zum vorbekannten Stand der Technik nahezu kein Haftmittel- oder Klebemittelabfall, der entsorgt werden müsste. Überdies ermöglichen es die Haftelemente oder Haftmittel-Trägerelemente, eine klar definierbare Haftmittel-Verbrauchsmenge festzulegen, so dass das für die Bearbeitung einer bestimmten Werkstückserie benötigte Material im voraus genau kalkulierbar ist. Falls beispielsweise die Abmessung der mit dem Deckmaterial zu versehenden Werkstücke bzw. Werkstückoberflächen bekannt ist, kann die benötigte Haftelementmenge bei vorgegebener Haftelementbreite einfach über die aufsummierte Länge der Werkstücke in Durchlaufrichtung plus eventueller Zugaben für fertigungsbedingte Toleranzen, Überstände usw., die sich sehr genau kalkulieren lassen, festgelegt werden. Für eine Werkstückserie ergibt sich dann eine bestimmte benötigte Länge des Haftelementes bzw. des Haftmittel-Trägerelementes. Ferner gestattet es das erfindungsgemäße Verfahren, eine für den jeweiligen Anwendungsfall exakte, genau dosierte Auftragsmenge des Haftmittels bereitzustellen und eine genau definierte Haftmittelfuge zu erzielen, woraus eine qualitativ hochwertige und solide Haftverbindung resultiert.

Im Vergleich zu vorbekannten Technologien sind bei den erfindungsgemäßen Verfahren selbst bei der Verarbeitung von unterschiedlichen oder wechselnden Werkstücktypen und/oder Deckmaterialarten nur vergleichsweise einfache und in kürzeren Zeiträumen durchführbare Einstell- bzw. Justierarbeiten notwendig, die sich zudem weitgehend automatisieren lassen. Dies ist per se nicht nur der Effizienz und damit der Wirtschaftlichkeit des erfindungsgemäßen Verfahrens zuträglich, sondern erleichtert auch die Reproduzierbarkeit des jeweils zu erzielenden Fertigungsergebnisses. In Verbindung mit den zuvor beschriebenen Vorteilen hat es sich des Weiteren als positiv herausgestellt, dass mit den erfindungsgemäßen Verfahren eine Reduzierung der zur Herstellung oder erneuten Herstellung der Betriebsbereitschaft erforderlichen Zeitdauer sowie eine nicht unerhebliche Steigerung der Bearbeitungsgeschwindigkeit realisiert werden kann, was sich insbesondere bei kleinen bis mittleren Werkstückserien günstig auf die Produktionszeiten und -kosten auswirkt.

Durch die zeitlich und örtlich genau kontrollierbare Aktivierung des über das Haftelement oder das Haftmittel-Trägerelement bereitgestellten Haftmittels sind bei den erfindungsgemäßen Verfahren die Haftungs- und Verbindungseigenschaften gezielt beeinflussbar und lassen sich flexibel an unterschiedliche Materialeigenschaften, Werkstoffe, Werkstoffkombinationen, Oberflächenbeschaffenheiten, die jeweilige Geometrie von Deckmaterial und Werkstück sowie an diverse andere Verfahrensparameter anpassen. Insbesondere auch gegenüber der vorbekannten Umleimertechnik bietet das erfindungsgemäße Verfahren weitere Vorzüge. Da das direkt und/oder indirekt am Verbindungsprozess teilnehmende Haftelement bzw. Haftmittel-Trägerelement als separates Teil bereitgestellt wird und folglich das Haftmittel nicht bereits im voraus mit dem Deckmaterial verbunden ist, sind diese Elemente, und daraus resultierend wiederum das gesamte Verfahren, im Gegensatz zum Umleimer nicht auf bestimmte Haftmittel oder Klebemittel beschränkt. Vielmehr kann ein optimal auf den jeweiligen Anwendungszweck abgestimmtes Haftmittel oder Klebemittel eingesetzt werden. Infolgedessen sind mit den erfindungsgemäßen Verfahren auch kritische Werkstoffe und Werkstoffkombinationen sowie Werkstücke und Deckmaterialien, die spezielle Oberflächeneigenschaften besitzen, und die mit der Umleimertechnologie nicht beherrschbar sind, mit einem qualitativ hochwertigen Endergebnis zu verarbeiten. Die erfindungsgemäßen Verfahren bieten somit ein weitaus breiteres Anwendungsspektrum.

Weil bei den erfindungsgemäßen Verfahren das Haftelement bzw. das Haftmittel-Trägerelement zunächst unabhängig von dem Deckmaterial bereitgestellt wird und nicht wie bei der konventionellen Umleimertechnologie bereits von vornherein auf dem Deckmaterial aufgetragen ist, kann das Haftmittel sehr gezielt und rasch aktiviert und somit die Verarbeitungsgeschwindigkeit gegenüber der vorbekannten Umleimertechnologie erheblich gesteigert werden. Ferner hat es sich herausgestellt, dass sich das bei dem erfindungsgemäßen Verfahren zur Anwendung kommende Haftelement je nach Ausgestaltungsform auch zum Überbrücken oder Ausgleichen von etwaigen Unebenheiten oder Unregelmäßigkeiten in der mit dem Deckmaterial zu versehenden Werkstückoberfläche verwenden lässt. In bestimmten Anwendungsfällen können daher vorausgehende Bearbeitungsschritte für das Vorbehandeln und/oder Vorvergüten von Werkstückoberflächen, wie sie bei konventionellen Verfahren oftmals erforderlich sind, entfallen.

Zusammenfassend betrachtet, ermöglichen die erfindungsgemäßen Verfahren demnach auf vergleichsweise einfache, effektive und köstengünstige Art und Weise die Herstellung einer stabilen und qualitativ hochwertigen haftenden Verbindung zwischen dem Deckmaterial und den Werkstückoberflächen der fortlaufend bewegten Werkstücke. Die erfindungsgemäßen Verfahren eröffnen somit die Möglichkeit einer erheblichen Rationalisierung bei gleichzeitig hoher Flexibilität und Wirtschaftlichkeit.

Gemäß einer vorteilhaften Ausführungsvariante der erfindungsgemäßen Verfahren ist vorgesehen, dass das Haftmittel vor und/oder während und/oder nach dem Zusammenführen mit den Werkstückoberflächen aktiviert wird. Auf diese Weise kann das Haftmittel gezielt manipuliert, auf geeignete Weise für die herzustellende Verbindung des Deckmaterials mit den Werkstückoberflächen vorbereitet sowie zu bestimmten, verfahrenstechnisch günstigen Zeitpunkten aktiviert und mit dem Deckmaterial und/oder den Werkstückoberflächen zusammengebracht und dadurch eine sichere Haftwirkung erreicht werden.

In Verbindung mit der Verwendung eines Haftmittel-Trägerelementes kann die Aktivierung des Haftmittels vor und/oder während und/oder näch dem Übertragen des Haftmittels auf die Werkstückoberflächen und/oder das Deckmaterial erfolgen. Auch dies gestattet eine gezielte Manipulation und Vorbereitung des Haftmittels für die zwischen dem Deckmaterial und den Werkstückoberflächen herzustellende Verbindung, sowie eine Aktivierung und Zusammenführung des Haftmittels mit dem Deckmaterial und/oder den Werkstückoberflächen zu einem verfahrenstechnisch jeweils günstigen Zeitpunkt, wodurch eine sichere Haftwirkung erreicht wird.

Das mit einem Haftelement arbeitende erfindungsgemäße Verfahren sieht des weiteren eine Ausführungsvariante vor, bei der vor dem Schritt d) das Haftmittel teilweise aktiviert und das Haftelement zunächst mit einer Seite an einer jeweiligen Werkstückoberfläche angehaftet wird. Die Anhaftung dieser einen Seite kann nur partiell oder aber bereits vollständig erfolgen. Falls die erste Seite nur teilweise angehaftet wird, erfolgt ihre vollständige Anhaftung zweckmäßigerweise zu einem späteren Zeitpunkt bzw. beim vollständigen Aktivieren des Haftmittels. Das wie zuvor beschrieben teilweise aktivierte Haftmittel wird dann in einem späteren Verfahrensschritt vor und/oder während und/oder nach dem Zusammenführen des Deckmaterials mit der Werkstückoberfläche, an der es bereits anhaftet, vollständig aktiviert und mit seiner zweiten Seite an dem Deckmaterial angehaftet, so dass das Deckmaterial und die Werkstückoberfläche haftend miteinander verbunden werden. Die zuvor beschriebenen Maßnahmen gestatten zum einen eine gewisse Vorfixierung des Haftelementes an der Werkstückoberfläche und damit eine Stabilisierung der Haftelementzuführung und zum anderen die Anwendung von bestimmten vorteilhaften Aktivierungsmaßnahmen, die nachfolgend noch näher beschrieben werden.

Analog zu der im vorherigen Absatz erläuterten Verfahrensweise ist es ebenso möglich, dass vor dem Schritt d) das Haftmittel teilweise aktiviert und das Haftelement zunächst mit einer Seite an dem Deckmaterial angehaftet wird.
Das wie zuvor beschrieben teilweise aktivierte Haftmittel wird dann zweckmäßigerweise in einem späteren Verfahrensschritt vor und/oder während und/oder nach dem Zusammenführen der Werkstückoberfläche mit dem Deckmaterial, an dem es bereits anhaftet, vollständig aktiviert und mit seiner zweiten Seite an der Werkstückoberfläche angehaftet, so dass das Deckmaterial und die Werkstückoberfläche haftend miteinander verbunden werden.

Im Zusammenhang mit dem zuvor beschriebenen Anhaftungsvorgang, der zunächst nur an einer Seite des Haftelementes erfolgt, sowie der Verwendung von wärmeaktivierbaren Haftmitteln, kann es in bestimmten Anwendungsfällen von Vorteil sein, das Haftelement mit einer die.beiden Haftelementseiten trennenden Mittelschicht zu versehen, die eine schlechte Wärmeleitfähigkeit besitzt, so das eine Aktivierung der jeweils anderen, zu diesem Zeitpunkt nicht benötigten Haftelementseite sicher vermieden werden kann.

Es hat sich ferner als vorteilhaft herausgestellt, bestimmte Schritte der erfindungsgemäßen Verfahren unter Druckeinwirkung auszuführen. So kann beispielsweise das Anhaften der ersten Seite des Haftelementes an der Werkstückoberfläche unter Druckeinwirkung erfolgen. Ferner ist es möglich, das Anhaften der zweiten Seite des Haftelementes an das Deckmaterial unter Druckeinwirkung auszuführen. Auch kann im Schritt c) das Aktivieren oder Teilaktivieren des Haftmittels unter Druckeinwirkung erfolgen. Ferner ist es bevorzugt, dass im Schritt d) das Deckmaterial unter Druckeinwirkung mit den Werkstückoberflächen zusammengeführt wird. Überdies kann im Fall der Verwendung eines Haftmittel-Trägerelementes im Schritt v) das Übertragen des Haftmittels unter Druckeinwirkung erfolgen. Auf diese Weise kann sowohl die Haftwirkung des Haftmittels und die Qualität und Festigkeit der Haftverbindung zwischen dem Deckmaterial und den Werkstückoberflächen positiv beeinflusst als auch eine jeweils günstige Aktivierungsform für einen bestimmten Haftmitteltyp gewählt werden.

Für die Art und Weise des Aktivierens des Haftmittels sehen die erfindungsgemäßen Verfahren diverse Möglichkeiten vor. So erfolgt das zumindest teilweise und/oder vollständige Aktivieren des Haftmittels vorzugsweise durch ein Mittel und/oder einen Vorgang und/oder eine Kombination daraus, das/der/die ausgewählt ist aus einer Gruppe bestehend aus: direktes und/oder indirektes Erwärmen des Haftmittels, Erzeugen einer chemischen Reaktion im Haftmittel, Erzeugen einer chemischen Reaktion des Haftmittels mit dem Werkstück und/oder dem Deckmaterial, Hindurchleiten eines elektrischen Stroms durch das Haftmittel und/oder das Haftelement und/oder das Haftmittel-Trägerelement.

Eine direkte Erwärmung des Haftmittels kann z.B. durch Bestrahlen des Haftmittels mit einer Infrarotstrahlung, das Vorbeileiten eines warmen Gases oder einer warmen Flüssigkeit an dem Haftmittel oder durch das Anlegen von Ultraschall an das Haftmittel erfolgen. Eine indirekte Erwärmung kann beispielsweise dann vorliegen, wenn das Haftmittel durch Kontakt mit einem vorgewärmten Werkstück und/oder Deckmaterial erwärmt wird. Eine direkte Erwärmung ist unter anderem mittels Reibung, starker Kompression, Anlegen von Ultraschall, Bestrahlen mit Infrarotstrahlung, UV-Strahlung oder einer anderen geeigneten Strahlung, Vorbeileiten eines erwärmten Gases, z.B. Luft, oder Fluids oder dergleichen realisierbar.

Eine chemische Reaktion im Haftmittel kann bei geeigneter chemischer Zusammensetzung des Haftmittels beispielsweise über Wärmezufuhr, eine Initialzündung, einen fotochemischen Effekt, eine Bestrahlung des Haftmittel, z.B. mit UV-Strahlung oder Laserlicht, oder durch Druckbeaufschlagung erfolgen (z.B. wenn der Reaktant und mindestens ein Initiator in gekapselter Form in dem Haftmittel oder verschiedenen Schichten des Haftelementes bzw. des Haftmittel-Übertragungselementes eingelagert sind und durch die Druckeinwirkung zusammengeführt bzw. vermischt werden. Eine Druckbeaufschlagung schließt im Übrigen eine walkartige Druckbelastung mit ein). In diesem Zusammenhang ist es auch denkbar, das Haftelement bzw. des Haftmittel-Übertragungselement mehrteilig auszubilden oder mehrere, miteinander korrespondierende Haftelemente bzw. Haftmittel-Übertragungselemente oder sogar Zusatzelemente zu verwenden, die jeweils den Reaktanten und den mindestens einen Initiator enthalten und bei einem Zusammenführen oder Vermischen die chemische Reaktion auslösen. Der Reaktant oder Initiator kann auch in Pulver- oder Granulatform separat zugeführt werden und erst in einem geeigneten Zeitpunkt mit dem Haftelement bzw. dem Haftmittel-Übertragungselement in Kontakt gebracht werden, wodurch die chemische Reaktion ausgelöst wird. Die Geschwindigkeit der chemischen Reaktion kann durch die chemische Zusammensetzung des Haftmittels beeinflusst werden. Sie kann zum Beispiel langsam oder extrem schnell, d.h. bei einer pyrotechnischen Anwendung sogar explosionsartig, ablaufen.

Das Erzeugen einer chemischen Reaktion des Haftmittels mit dem Werkstück und/oder dem Deckmaterial kann zum Beispiel wiederum durch Erwärmen des Werkstückes und/oder des Deckmaterials und durch einen Wärmeübergang vom Werkstück und/oder Deckmaterial auf das Haftmittel erfolgen. Ferner kann ein Initiator oder der Reaktant auf das Werkstück und/oder das Deckmaterial aufgebracht und die chemische Reaktion bei einem entsprechenden Kontakt (ggf. auch unter Druckeinwirkung) mit dem Haftmittel ausgelöst werden. Auch katalytische Effekte sind denkbar.

Das Hindurchleiten eines elektrischen Stromes durch das und/oder das Haftelement und/oder das Haftmittel-Trägerelement kann entweder dazu genutzt werden, bei geeigneter chemischer Zusammensetzung des Haftmittels eine elektrochemische Reaktion in dem Haftmittel auszulösen, oder das Haftmittel durch eine elektrothermische Erwärmung (z.B. widerstandsbedingt oder durch Anlegen von hochfrequenten Wechselfeldern) zu aktivieren. Zu diesem Zweck können.. elektrisch leitfähige Substanzen (z.B. Graphitpartikel, Metallpartikel, oder sogar vollständige Leiterbahnen) in das Haftmittel selbst und/oder das Haftelement und/oder das Trägergrundelement des Haftmittel-Trägerelementes eingelagert und der elektrische Strom über das Haftmittel und/oder das Haftelement und/oder das Trägermaterial berührende elektrische Kontakte (z.B. Schleifkontakte oder Rollenkontakte) angelegt werden. Im Falle der Verwendung von Wechselfeldern ist es aufgrund von Induktionseffekten sogar möglich, den elektrischen Strom berührungslos einzuspeisen.

Entsprechend einer weiteren vorteilhaften Verfahrensvariante werden die mit dem Deckmaterial zusammenzuführenden Werkstückoberflächen vor einem Kontakt mit dem Haftmittel erwärmt und/oder mit einem Haftmittel-Aktvierungsmittel versehen. Da die Werkstücke gegenüber dem das Haftmittel tragenden Haftelement bzw. Haftmittel-Trägerelement eine erheblich größere Masse und damit auch bessere Wärmespeicherungseigenschaften aufweisen, kann beim Kontaktieren des Werkstückes mit dem Haftmittel das Haftmittel leicht erwärmt und damit aktiviert werden. Ein auf die Werkstückoberflächen aufgetragenes Haftmittel-Aktvierungsmittel wiederum kann beim Kontakt als Initiator zur Aktivierung des Haftmittels fungieren.

Bei dem erfindungsgemäßen Verfahren gemäß dem einer zweiten Verfahrensweise ist es bevorzugt, dass im Schritt v) das Haftmittel im wesentlichen vollständig von dem Haftmittel-Trägerelement abgelöst wird. Auf diese Weise entstehen keine unnötigen Haftmittelverluste, und das nach der Verarbeitung verbleibende Trägergrundelement des Haftmittel-Trägerelementes kann problemlos entsorgt werden.

Ein weiteres vorteilhaftes Ausführungsmerkmal der erfindungsgemäßen Verfahren sieht vor, dass das Haftelement vor dem Aktivieren auf eine vorbestimmte, mit dem Werkstück und/oder der Werkstückoberfläche korrespondierende Abmessung, insbesondere Länge, abgetrennt wird. Der nachfolgende Aktivierungsvorgang kann sich dadurch auf die tatsächlich benötigte Haftelementmenge beschränken, und überstehende Haftelementreste sowie damit verbundene aufwendige Nachbearbeitungsmaßnahmen am fertigen Werkstück sind weitgehend vermeidbar.

Ferner hat es sich als verfahrenstechnisch günstig erwiesen, dass in derjenigen Verfahrensvariante, bei der das Haftelement, das an einem bezogen auf die Durchlaufrichtung vorauseilenden Haftelementabschnitt, in dem das Haftmittel bereits zumindest teilweise aktiviert ist, zunächst nur mit seiner ersten Seite an einer jeweiligen Werkstückoberfläche bzw. dem Deckmaterial anhaftet, an einem bezogen auf die Durchlaufrichtung nacheilenden Haftelementabschnitt, in dem das Haftmittel noch nicht aktiviert ist, hinter dem Werkstück bzw. dem Deckmaterial abgetrennt wird. Eine Abtrennung hinter dem Deckmaterial setzt natürlich voraus, dass das Deckmaterial in diesem Fall nicht in Endlosform, sondern in Stücken von endlicher Länge bereitgestellt wird. Da das Haftelement bereits mit einer Seite vorfixiert ist, kann sich die Lage des Haftelementes nach dem Abtrennen nicht auf unerwünschte Weise verändern. Ferner wird das Haftelement auf eine exakt benötigte Länge gekürzt. Weil nachfolgende Werkstücke bzw. Deckmaterialstücke aufgrund des Abtrennvorgangs nicht mehr über das Haftelement aneinander hängen, lassen sich die Werkstücke bzw. die Deckmaterialstücke auch leicht einzeln und individuell weiterverarbeiten.

Gemäß einem zusätzlichen bevorzugten Merkmal der erfindungsgemäßen Verfahren wird das Deckmaterial vor dem Anhaften an eine jeweilige Werkstückoberfläche auf eine vorbestimmte, mit dem Werkstück korrespondierende Abmessung abgetrennt. Somit steht das Deckmaterial in handlichen und einzeln gut zu verarbeitenden Stücken zur Verfügung und benötigt nach dem Verbinden mit der Werkstückoberfläche in der Regel keine weiteren aufwendigen Nachbearbeitungen.

Sofern ein Deckmaterial mit einer großen Länge oder in endloser Form verarbeitet wird, ist es vorteilhaft, das vollständig angehaftete Deckmaterial nach dem Schritt d) bzw. x) in Laufrichtung hinter dem Werkstück abzutrennen, so dass das fertige Werkstück unabhängig weiterverarbeitet und eine Beschädigung von nachfolgenden Deckmaterialabschnitten vermieden werden kann.

Insbesondere im Zusammenhang mit der Verwendung von wärmeaktivierbaren Haftmitteln oder Haftmitteln, die bei Ihrer Aktivierung eine relativ hohe Reaktionswärme entwickeln und/oder nur langsam aushärten, hat es sich als positiv erwiesen, dass die Werkstücke nach dem Schritt d) oder x) gekühlt werden. Die Kühlung erfolgt zweckmäßigerweise direkt an den Werkstückbereichen, an denen das Deckmaterial angebracht wurde. Die Kühlung kann im Durchlauf oder auch stationär oder schrittweise durchgeführt werden. Auf diese Weise wird das Haftmittel rasch verfestigt und ein endgültiger Haftungszustand erzielt. Die fertigen Werkstücke lassen sich dann umgehend weiterbearbeiten bzw. an ihren Verbindungsbereichen zwischen Deckmaterial und Werkstückoberfläche mechanisch höheren Beanspruchungen aussetzen. Falls dem Schritt d) oder x) eine zusätzliche Teilaktivierung des Haftmittels vorausgeht, kann unter Umständen auch noch eine Zwischenkühlung des teilaktivierten Haftmittels erfolgen.

Bei der Verarbeitung eines Haftelementes ist es überdies von Vorteil, wenn im Schritt b) das Haftelement in einem bezogen auf seine Breitenrichtung mindestens einfach (bei Bedarf jedoch auch mehrfach, z.B. doppelt oder dreifach) gefalteten Zustand zwischen das Deckmaterial und die sich fortbewegenden Werkstückoberflächen gefördert wird. Das Falten kann hierbei sukzessiv oder in einem einzelnen Arbeitsschritt erfolgen. Zur Erleichterung des Faltvorgangs kann das Haftelement vorgefertigte Faltlinien aufweisen, die jedoch nicht zwingend notwendig sind. Nach dem fortlaufenden Zusammenführen des Deckmaterials und der Werkstückoberflächen und der Herstellung der haftenden Verbindung zwischen diesen Teilen mittels des Haftelementes verbleibt das Haftelement also letztendlich auch in einem gefalteten Zustand zwischen Deckmaterial und Werkstückoberfläche. Diese Verfahrensvariante bietet die Möglichkeit, einen einzelnen Haftelementtyp bzw. Haftelementstreifen mit einer vorgegebenen Breite an unterschiedliche Werkstückdicken bzw. zu bearbeitende Werkstückbereiche mit unterschiedlichen Abmessungen anzupassen, ohne dass die Notwendigkeit eines vorherigen oder nachfolgenden Zuschneidens des Haftelementes auf eine passende Breite oder das Erfordernis eines Austausches gegen einen anderen Haftelementtyp passender Breite besteht. Das Falten des Haftelementes kann darüber hinaus dazu dienen, bestimmte Werkstückbereiche örtlich mit einer größeren Menge von Haftmittel, nämlich an den gefalteten Haftelementbereichen, zu versehen. Faltungen können symmetrisch oder asymmetrisch sowohl nur zu einer als auch zu beiden Haftelementseiten hin durchgeführt werden. Besonders bevorzugte Faltungsmuster, auf die die Erfindung jedoch nicht beschränkt ist, sind solche, bei denen die Randzonen des Haftelementes doppelt liegend nach innen (d. h. zum Haftelementmittelbereich hin) gefaltet werden, oder bei denen das Haftelement im Mittelbereich dreifach liegend gefaltet wird. Ein ein- oder mehrfaches Falten des Haftelementes kann im Sinne der Erfindung natürlich auch in Längsrichtung des Haftelementes erfolgen. Wird das gefaltete Haftelement in den Faltungsbereichen zumindest teilweise aktiviert, haften die Faltungsbereiche aneinander, so dass sich ein stabiles, gefaltetes Haftelement mit einer reduzierten Haftelementbreite erzielen lässt, das leicht weiterzuverarbeiten und zu handhaben ist. Eine solche Aktivierung des gefalteten Haftelementes ist allerdings nicht zwingend notwendig.

Das Verfahren kann jedoch auch als stationärer Prozess ausgestaltet sein, d.h. die Werkstücke werden für die hier in Frage stehenden Bearbeitungsschritte nicht fortbewegt. Die Bereitstellung des Haftelementes bzw. des Haftmittel-Trägerelementes kann - muss jedoch nicht zwingenderweise - fortlaufend oder schrittweise erfolgen.

### KURZE BESCHREIBUNG DER ZEICHNUNGEN

Es zeigt:
- Fig. 1: eine schematische, stark vereinfachte Perspektivansicht einer Vorrichtung, die zur Durchführung des erfindungsgemäßen Verfahrens gemäß einer ersten Verfahrensweise dient.
- Fig. 2: eine schematische, stark vereinfachte Perspektivansicht einer Vorrichtung, die zur Durchführung des erfindungsgemäßen Verfahrens gemäß einer zweiten Verfahrensweise dient.

### BESCHREIBUNG VON AUSFUHRUNGSBEISPIELEN DER ERFINDUNG

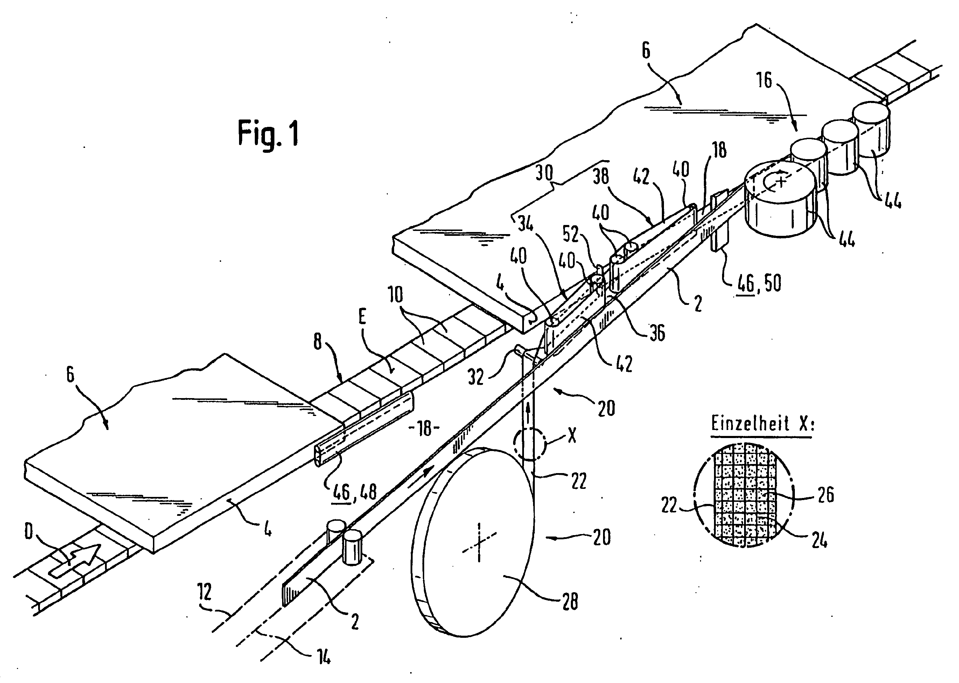

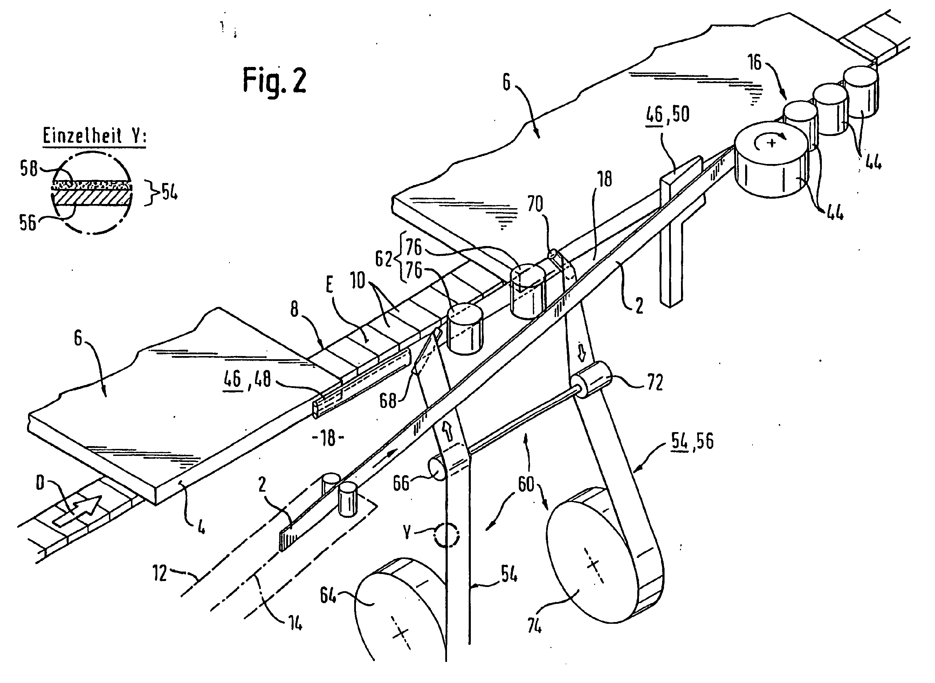

Es werden nun mit den Vorrichtungen nach Fig. 1 und Fig. 2 ausführbare, erfindungsgemäße Verfahren gemäß einer ersten bzw. zweiten Verfahrensweise zum Anhaften bzw. Ankleben eines Deckmaterials 2 an Werkstückoberflächen 4 von fortlaufend bewegten, platten- oder leistenförmigen Werkstücken 6 beschrieben.

Die Werkstücke 6 und ihre mit dem Deckmaterial 2 zu versehenden Seitenränder 6 befinden sich in der in Fig. 1 gezeigten Anordnung auf der Werkstück-Transporteinrichtung 8 und werden in Durchlaufrichtung D kontinuierlich fortbewegt. Die Seitenränder 4 werden hierbei durch die Erwärmungseinrichtung 48 auf eine vorbestimmte Temperatur erwärmt. Währenddessen wird das sich von der Spule 28 abwickelnde, mit dem wärmeaktivierbaren Haftmittel 26 versehene Haftelement 22 oder ein mit dem wärmeaktivierbaren Haftmittel 58 versehene Haftmittel- Trägerelement 54 bereitgestellt und, wie in der Zeichnung erkennbar, über den von der Umlenkrolle 32, dem Vakuumförderband 34 und dem Andruck-Vakuumförderband 38 vorgegebenen Förderweg in Richtung zu der Zusammenführungseinrichtung 16 bzw. in Richtung zu der Haftmittel-Übertragungseinrichtung 62 gefördert. Gleichzeitig wird über die Deckmaterial-Zuführeinrichtung 12 das Deckmaterial 2 in der in Fig. 1 gezeigten Weise auf der Zuführungsbahn 14 zu der Zusammenführungseinrichtung 16 bewegt .

Sobald ein Werkstück 6 mit seinem erwärmten Seitenrand 4 an dem Andruck-Vakuumförderband 38 bzw. an den Druckrollen 76 der Haftmittel-Übertragungseinrichtung 62 vorbeiläuft, wird die dem Seitenrand 4 zugewandte Seite des Haftelementes 22 bzw. das durch den Durchgangsspalt zwischen dem Seitenrand 4 und den Mantelflächen der Druckrollen 76 hindurchgeführte Haftmittel-Trägerelement 54 mit seiner Haftmittelseite an den Seitenrand 4 angepreßt und das Haftmittel 58 bzw. 26 durch den nun entstehenden Wärmeübergang aktiviert, so dass das Haftmittel 26 des Haftelementes 22 bzw. das Haftmittel 58 dort eine Klebewirkung entfaltet und das Haftelement 22 bzw. das Haftmittel 58 mit dieser Seite an der durch den Seitenrand 4 gebildeten Werkstückoberfläche anhaftet bzw. anklebt. Die vorbestimmte Erwärmungstemperatur der Seitenränder 4 ist unter Berücksichtigung der jeweiligen Eigenschaften des Haftelementes 22 und seines Haftmittels 26 so eingestellt, dass das Haftelement 22 im Bereich des Andruck-Vakuumförderbandes 38 nicht vollständig durchwärmt wird, sondern nur die den Seitenrand 4 kontaktierende Seite aktiviert wird, während die das Andruck-Vakuumförderband 38 kontaktierende Haftelementseite im wesentlich unter der Aktivierungstemperatur bleibt und folglich keine Klebewirkung entfaltet.

Nachdem das derart mit einem Haftelement 22 vorbereitete Werkstück 6 das Andruck-Vakuumförderband 38 vollständig passiert hat, wird der nachlaufende Abschnitt des einseitig an der Werkstückoberfläche 4 anklebenden Haftelements 22 mittels dem Kappmesser 52 unmittelbar hinter dem Werkstück 6 abgetrennt. Das Werkstück 6 mit seinem angeklebten Haftelementabschnitt bewegt sich dann weiter in Durchlaufrichtung D zu der Zusammenführungseinrichtung 16. Das durch den Abtrennvorgang im Bereich des Zwischenraumes 36 entstandene freie vordere Ende des Haftelementes 22 sowie die diesem Ende nacheilenden und noch an dem Vakuumförderband 34 anliegenden Haftelementabschnitte werden mittels des Vakuumförderbandes 34 weiter in Richtung zum Andruck-Vakuumförderband 38 bewegt und stehen dann bereits dem nächsten Werkstück 6 zur Verfügung.

Sobald das vorbereitete Werkstück 6 mit seinem einseitig anhaftenden Haftelementabschnitt an dem Heizkeil 50 entlang läuft, wird die zweite, d.h. die dem Heizkeil 50 und dem Deckmaterial 2 zugewandte Seite des Haftelementes 22 erwärmt und dadurch das Haftmittel 26 dieser Haftelementseite aktiviert, wodurch in der Gesamtbetrachtung eine vollständige Aktivierung des über das Haftelement 22 zur Verfügung stehenden Haftmittels 26 erreicht wird. Gleichzeitig erwärmt der Heizkeil 50 die dem Haftelement 22 zugewandte Seite des sich auf die Zusammenführungseinrichtung 16 zu bewegenden Deckmaterials 2.

Bei einem alternativen Einsatz eines Haftmittel-Trägerelementes 54 wird das Haftmittel 58 im wesentlichen vollständig durchwärmt. Sobald das derart aktivierte und an der Werkstückoberfläche 4 anklebende Haftmittel 58, das nun eine erwärmte, zusammenhaltende Massenschicht bildet, bei einem Fortschreiten des Werkstückes 6 den Bereich der Druckrollen 76 bzw. der dritten Umlenkrolle 70 verlässt, wird es von dem Trägergrundelement 56, mit dem es nur einen vergleichsweise schwachen Zusammenhalt bildet, gewissermaßen abgezogen oder abgeschält und dabei im wesentlichen vollständig von dem Trägergrundelement 56 abgelöst.

Das Haftmittel 58 klebt nun als dünne Haftmittelschicht 58 auf dem Seitenrand 4. Das verbrauchte Haftmittel-Trägerelement 54, sprich das verbleibende Trägergrundelement 56, wird weiter zu der Aufnahmespule 74 transportiert und dort aufgewickelt. Es ist ersichtlich, dass bei diesem Vorgang im wesentlichen kein Haftmittelabfall anfällt und die .aufgespulten Haftmittel-Trägerelementreste später einfach entsorgt oder einer Wiederverwertung zugeführt werden können.

Das auf die zuvor beschriebene Weise vorbereitete Werkstück 6 mit seiner auf dem Seitenrand 4 aufgetragenen Haftmittelschicht 58 wird nun weiter in Durchlaufrichtung D zu der Mündung der Zusammenführungseinrichtung 16 fortbewegt. Hierbei läuft das Werkstück 6 mit seinem Seitenrand 4 an dem Heizkeil 50 entlang. Dieser Heizkeil 50 ist gegenüber dem in Fig. 1 gezeigten Heizkeil in Durchlaufrichtung D langgestreckter ausgebildet, so dass sich für den vorbeilaufenden Seitenrand 4 eine längere Erwärmungsphase ergibt. Dies ist im vorliegenden Fall notwendig, da die an den Seitenrändern 4 anklebende Haftmittelschicht 58 auf ihrem Weg von den Druckrollen 76 zu dem Heizkeil 50 unter Umständen soweit abgekühlt ist, dass sie bis zum Erreichen der Zusammenführungseinrichtung 16 keine ausreichende Klebewirkung mehr entfalten könnte. Der Heizkeil 50, der hier gewissermaßen eine Haftmittel-Reaktivierungseinrichtung darstellt, erwärmt die bestehende Haftmittelschicht 58 erneut soweit, dass das Haftmittel 58 wieder seine im wesentlichen volle Klebewirkung besitzt. Gleichzeitig erwärmt der Heizkeil 50 die dem mit der Haftmittelschicht 58 versehenen Seitenrand 4 zugewandte Seite des sich auf die Zusammenführungseinrichtung 16 zu bewegenden Deckmaterials 2.

In diesem Zustand wird das Haftelement 22 bzw. die Haftmittelschicht 58 dann durch die fortschreitende Bewegung des Werkstückes 6 fortlaufend im Mündungsbereich der Zusammenführungseinrichtung 16 und damit zwischen das Deckmaterial 2 und die sich fortbewegende Werkstückoberfläche 4 gefördert und beginnt mit seiner zweiten, zuletzt aktivierten Seite an dem Deckmaterial 2 bzw. das Deckmaterial 2 an die Werkstückoberfläche, d.h. den Seitenrand 4, anzukleben. In der Zusammenführungseinrichtung 16, d.h. zwischen deren Andrückwalzen 44, erfolgt unter Druckeinwirkung ein fortlaufendes Zusammenführen des Deckmaterials 2 und der werkstückoberfläche 4 mit dem dazwischenliegenden Haftelement 22 bzw. Haftmittelschicht 58 wodurch schließlich eine vollständige, haftende bzw. klebende Verbindung zwischen dem Deckmaterial 2 und der Werkstückoberfläche 4 hergestellt wird.

Durch die der Zusammenführungseinrichtung 16, 44 nachgeschaltete Haftmittel-Kühleinrichtung wird das Haftmittel 26 bzw. 58 dann gekühlt und somit eine vollständige Aushärtung des Haftmittels 26 bzw. 58 sichergestellt. Mittels der nachgeschalteten Deckmaterial-Trenneinrichtung werden etwaige überstehende Reste des angeklebten Deckmaterials 2 entfernt, so dass sich ein sauberer, mit dem Deckmaterial 2 versehener Werkstückrand 4 ergibt.

Damit sind die mit dem Anhaften bzw. Ankleben des Deckmaterials 2 an der Werkstückoberfläche 4 zusammenhängenden Schritte abgeschlossen, und das Werkstück 6 kann bei Bedarf weiteren Bearbeitungsstationen zugeführt werden. Für nachfolgende Werkstücke 6 läuft das Verfahren analog ab.

Die Erfindung ist nicht auf die obigen Ausführungsbeispiele, die lediglich der allgemeinen Erläuterung des Grundgedankens der Erfindung dienen, beschränkt. Im Rahmen des Schutzumfangs können die erfindungsgemäßen Verfahren vielmehr auch andere als die oben beschriebenen Ausgestaltungsformen annehmen. Die Verfahren können hierbei insbesondere Merkmale aufweisen, die eine Kombination aus den jeweiligen Einzelmerkmalen der zugehörigen Ansprüche darstellen. Es wird besonders darauf hingewiesen, dass der Verlauf der Förderwege bzw. Transportwege oder Bahnführungen des Haftelementes, des Haftmittel-Trägerelementes und des Deckmaterials anders als in den oben beschriebenen Beispielen sein kann.

Es ist zudem ersichtlich, dass in Abhängigkeit der Positionierung der jeweiligen Vorrichtungskomponenten sowie der Auswahl der das Haftmittel zur Verfügung stellenden Hilfsmittel die Reihenfolge der einzelnen Verfahrensschritte stark variieren kann. Falls ein Haftelement oder ein Haftmittel-Trägerelement gegen ein anderes ausgetauscht wird, was durchaus im laufenden Betrieb erfolgen kann, oder eines dieser Element im laufenden Betrieb reißt und für eine Fortsetzung des Verarbeitungsvorgangs erneut dem Prozess zugeführt werden muss, ist es möglich, dass Anfang und Ende von jeweiligen Elementenabschnitten überlappt und ggf. sogar unter Anwendung einer Hilfsaktivierungseinrichtung über ihre eigenen Haftmittel miteinander verbunden werden. Ebenso ist natürlich eine mechanische Verbindung der betreffenden Elementenabschnitte vorstellbar.

Bezugszeichen in den Ansprüchen, der Beschreibung und den Zeichnungen dienen lediglich dem besseren Verständnis der Erfindung und sollen den Schutzumfang nicht einschränken.

## Patentansprüche

1. Verfahren zum Anhaften eines Deckmaterials (2) an Werkstückoberflächen (4) von fortlaufend bewegten (8), platten- oder leistenförmigen Werkstücken (6), umfassend folgende Schritte:
a) Bereitstellen (20, 28) von mindestens einem band- oder streifenförmigen Haftelement (22), das mit einem aktivierbaren Haftmittel (26) versehen ist,
b)fortlaufendes Fördern (16, 20, 34, 38) des Haftelementes (22) zwischen das Deckmaterial (2) und die sich fortbewegenden Werkstückoberflächen (4),
c) zumindest teilweises Aktivieren (46, 48, 50) des Haftmittels (26), in einem bezogen auf die Durchlaufrichtung (D) vorauseilenden Haftelementabschnitt, sowie Anheften dieses Haftelementes nur mit seiner ersten Seite an einer jeweiligen Werkstückoberfläche (4) bzw. dem Deckmaterial (2),
d) Abtrennen des Haftelementes an einem bezogen auf die Durchlaufrichtung (D) nacheilenden Haftelementabschnitt, in dem das Haftmittel (26) noch nicht aktiviert ist, hinter dem Werkstück (6) bzw. dem Deckmaterial (2), und
e) fortlaufendes Zusammenführen (16) des Deckmaterials (2) und der Werkstückoberflächen (4) mit dem dazwischenliegenden Haftelement (22) zum Zwecke der Herstellung einer haftenden Verbindung zwischen dem Deckmaterial (2) und den Werkstückoberflächen (4).

2. Verfahren zum Anhaften eines Deckmaterials (2) an Werkstückoberflächen (4) von fortlaufend bewegten (8), platten- oder leistenförmigen Werkstücken (6), umfassend folgende Schritte:
u) Bereitstellen (60, 64) von mindestens einem band- oder streifenförmigen Haftmittel-Trägerelement (54), das mit einem aktivierbaren Haftmittel (58) versehen ist,
v)fortlaufendes Übertragen (62, 76) des Haftmittels (58) von dem Haftmittel-Trägerelement (54) auf die Werkstückoberflächen (4) und/oder das Deckmaterial (2) und damit fortlaufendes Fördern des Haftmittels (58) zwischen das Deckmaterial (2) und die sich fortbewegenden Werkstückoberflächen (4),
w) zumindest teilweises Aktivieren (46, 48, 50) des Haftmittels (58) in einen bezogen auf die Durchlaufrichtung vorauseilenden Haftmittelabschnitt,
x) Abtrennen des Haftmittel-Trägerelementes in einem bezogen auf die Durchlaufrichtung nacheilenden Haftmittelabschnitt hinter dem Werkstück bzw. dem Deckmaterial, und
y) fortlaufendes Zusammenführen (16) des Deckmaterials (2) und der Werkstückoberflächen (4) mit dem dazwischenliegenden Haftmittel (58), zum Zwecke der Herstellung einer haftenden Verbindung zwischen dem Deckmaterial (2) und den Werkstückoberflächen (4).

3. Verfahren nach Anspruch 1 oder 2,
**dadurch gekennzeichnet, dass**
das Haftmittel (26, 58) vor dem Zusammenführen (16, 60) mit den Werkstückoberflächen (4) aktiviert (46, 48, 50) wird.

4. Verfahren nach Anspruch 1, 2 oder 3,
**dadurch gekennzeichnet, dass**
das Haftmittel (26, 58) während des Zusammenführens (16, 38, 60) mit den Werkstückoberflächen (4) aktiviert (46, 48, 50) wird.

5. Verfahren nach einem der Ansprüche 1 bis 4,
**dadurch gekennzeichnet, dass**
das Haftmittel (26, 58) nach dem Zusammenführen (38, 60) mit den Werkstückoberflächen (4) aktiviert (50) wird.

6. Verfahren nach einem der Ansprüche 2 bis 5,
**dadurch gekennzeichnet, dass**
das Haftmittel (58) vor dem Übertragen (62, 76) aktiviert wird.

7. Verfahren nach einem der Ansprüche 2 bis 6,
**dadurch gekennzeichnet, dass**
das Haftmittel (58) während des Übertragens (62, 76) aktiviert (48, 4) wird.

8. Verfahren nach einem der Ansprüche 2 bis 7,
**dadurch gekennzeichnet, dass**
das Haftmittel (58) nach dem Übertragen (62, 76) aktiviert wird.

9. Verfahren nach Anspruch 1 oder 2,
**dadurch gekennzeichnet, dass**
das Anhaften der ersten Seite des Haftelementes (22) an der Werkstückoberfläche (4) unter Druckeinwirkung (38) erfolgt.

10. Verfahren nach Anspruch 1,
**dadurch gekennzeichnet, dass**
das Anhaften der zweiten Seite des Haftelementes (22) an das Deckmaterial (2) unter Druckeinwirkung (44) erfolgt.

11. Verfahren nach einem der Ansprüche 2 bis 8,
**dadurch gekennzeichnet, dass**
im Schritt w) das Aktivieren des Haftmittels (48, 4) unter Druckeinwirkung (38) erfolgt.

12. Verfahren nach Anspruch 1,
**dadurch gekennzeichnet, dass**
im Schritt e) das Zusammenführen (16) des Deckmaterials (2) mit den Werkstückoberflächen (4) unter Druckeinwirkung (44) erfolgt.

13. Verfahren nach Anspruch 2,
**dadurch gekennzeichnet, dass**
im Schritt v) das Übertragen (62) des Haftmittels (58) unter Druckeinwirkung (76) erfolgt.

14. Verfahren nach einem oder mehreren der vorhergenannten Ansprüche,
**dadurch gekennzeichnet, dass**
das zumindest teilweise und/oder vollständige Aktivieren des Haftmittels (26, 58) durch ein Mittel und/oder einen Vorgang und/oder eine Kombination daraus erfolgt, das/der/die ausgewählt ist aus einer Gruppe bestehend aus:
- direktes und/oder indirektes Erwärmen (48, 50) des Haftmittels (26, 58),
- Erzeugen einer chemischen Reaktion im Haftmittel (26, 58),
- Erzeugen einer chemischen Reaktion des Haftmittels (26, 58) mit dem Werkstück (4, 6),
- Hindurchleiten eines elektrischen Stroms durch das Haftmittel (26, 58) und/oder das Haftelement (22) und/oder das Haftmittel-Trägerelement (54).

15. Verfahren nach einem oder mehreren der vorhergenannten Ansprüche,
**gekennzeichnet durch**
die mit dem Deckmaterial (2) zusammenzuführenden Werkstückoberflächen (4) vor einem Kontakt (38, 76) mit dem Haftmittel (26, 58) erwärmt (48) und/oder mit einem Haftmittel-Aktivierungsmittel versehen werden.

16. Verfahren nach Anspruch 2 oder 13,
**dadurch gekennzeichnet, dass**
im Schritt v) das Haftmittel (58) im wesentlichen vollständig von dem Haftmittel-Trägerelement (54) abgelöst wird.

17. Verfahren nach Anspruch 1 oder 2,
**dadurch gekennzeichnet, dass**
die Werkstücke (6) nach dem Schritt e) oder y) gekühlt werden.

## Claims

1. Method for adhering a cover material (2) to work piece surfaces (4) of continuously moving (8) board- or batten-shaped work pieces (6), including the following steps:
a) providing (20, 28) at least one band- or strip-shaped adhesive element (22) which is provided with an activatable adhesive (26),
b) continuously conveying (16, 20, 34, 38) the adhesive element (22) between the cover material (2) and the moving work piece surfaces (4),
c) at least partially activating (46, 48, 50) the adhesive (26), in a leading adhesive element section referred to the direction of through-travel (D), and fixing this adhesive element only by its first side to a respective work piece surface (4) or the cover material (2),
d) separating the adhesive element in a trailing adhesive element section referred to the direction of through-travel (D) in which the adhesive (26) is not yet activated, behind the work piece (6) or the cover material (2), and
e) continuously combining (16) the cover material (2) and the work piece surfaces (4) with the adhesive element (22) between them, for the purpose of making an adhesive bond between the cover material (2) and the work piece surfaces (4) .

2. Method for adhering a cover material (2) to work piece surfaces (4) of continuously moving (8), board- or batten-shaped work pieces (6), including the following steps:
u) providing (60, 64) at least one band- or strip-shaped adhesive carrier element (54) which is provided with an activatable adhesive (58),
v) continuously transferring (62, 76) the adhesive (58) from the adhesive carrier element (54) to the work piece surfaces (4) and/or the cover material (2) and thus continuously conveying the adhesive (58) between the cover material (2) and the moving work piece surfaces (4),
w) at least partially activating (46, 48, 50) the adhesive (58) in a leading adhesive section referred to the direction of through-travel,
x) separating the adhesive carrier element in a trailing adhesive section referred to the direction of through-travel, behind the work piece or the cover material, and
y) continuously combining (16) the cover material (2) and the work piece surfaces (4) with the adhesive (58) between them, for the purpose of making an adhesive bond between the cover material (2) and the work piece surfaces (4).

3. Method according to claim 1 or 2, **characterised in that** the adhesive (26, 58) is activated (46, 48, 50) before combining (16, 60) with the work piece surfaces (4).

4. Method according to claim 1, 2 or 3, **characterised in that** the adhesive (26, 58) is activated (46, 48, 50) during combining (16, 38, 60) with the work piece surfaces (4).

5. Method according to any of claims 1 to 4, **characterised in that** the adhesive (26, 58) is activated (50) after combining (38, 60) with the work piece surfaces (4).

6. Method according to any of claims 2 to 5, **characterised in that** the adhesive (58) is activated before transfer (62, 76).

7. Method according to any of claims 2 to 6, **characterised in that** the adhesive (58) is activated (48, 4) during transfer (62, 76).

8. Method according to any of claims 2 to 7, **characterised in that** the adhesive (58) is activated after transfer (62, 76).

9. Method according to claim 1 or 2, **characterised in that** adhesion of the first side of the adhesive element (22) to the work piece surface (4) is effected under the influence of pressure (38).

10. Method according to claim 1, **characterised in that** adhesion of the second side of the adhesive element (22) to the cover material (2) is effected under the influence of pressure (44).

11. Method according to any of claims 2 to 8, **characterised in that** in step w) activation of the adhesive (48, 4) is effected under the influence of pressure (38).

12. Method according to claim 1, **characterised in that** in step e) combining (16) the cover material (2) with the work piece surfaces (4) is effected under the influence of pressure (44).

13. Method according to claim 2, **characterised in that** in step v) transfer (62) of the adhesive (58) is effected under the influence of pressure (76).

14. Method according to one or more of the preceding claims, **characterised in that** at least partial and/or complete activation of the adhesive (26, 58) is effected by an agent and/or a process and/or a combination thereof which is selected from a group consisting of:
- direct and/or indirect heating (48, 50) of the adhesive (26, 58),
- producing a chemical reaction in the adhesive (26, 58),
- producing a chemical reaction of the adhesive (26, 58) with the work piece (4, 6),
- passing an electrical current through the adhesive (26, 58) and/or the adhesive element (22) and/or the adhesive carrier element (54).

15. Method according to one or more of the preceding claims, **characterised in that** the work piece surfaces (4) to be combined with the cover material (2) is heated (48) and/or provided with an adhesive activator before contact (38, 76) with the adhesive (26, 58).

16. Method according to claim 2 or 13, **characterised in that** in step v) the adhesive (58) is essentially completely detached from the adhesive carrier element (54).

17. Method according to claim 1 or 2, **characterised in that** the work pieces (6) are cooled after step e) or y).

## Revendications

1. Procédé pour faire adhérer un matériau de recouvrement (2) sur des surfaces de pièce (4), de pièces (6) en forme de plaques et de baguettes, se déplaçant en continu (8), comprenant les étapes suivantes :
a) fourniture (20, 28) d'au moins un élément d'adhésion (22) en forme de bande ou de ruban, muni d'un agent adhésif (26) activable,
b) transport continu (16, 20, 34, 38) de l'élément d'adhésion (22) entre le matériau de recouvrement (2) et les surfaces de pièce (4) déplacées,
c) activation (46, 48, 50) au moins partielle de l'agent adhésif (26), dans un tronçon d'élément adhésif se déplaçant en avant, en se référant à la direction de passage (D), ainsi que mise en adhésion de cet élément d'adhésion uniquement par sa première face sur une surface de pièce (4) respective ou sur le matériau de recouvrement (2),
d) séparation de l'élément d'adhésion sur un tronçon d'élément d'adhésion se déplaçant à l'arrière par rapport à la direction de passage (D), dans lequel l'agent adhésif (26) n'est pas encore activé, derrière la pièce (6) ou le matériau de recouvrement (2), et
e) jonction continue (16) du matériau de recouvrement (2) et des surfaces de pièce (4) avec l'élément d'adhésion (22) situé en position intermédiaire, afin de produire une liaison adhésive, entre le matériau de recouvrement (2) et les surfaces de pièce (4).

2. Procédé pour faire adhérer un matériau de recouvrement (2) sur des surfaces de pièce (4), de pièce (6) en forme de plaques et de baguettes, se déplaçant en continu (8), comprenant les étapes suivantes :
u) fourniture (60, 64) d'au moins un élément support d'agent adhésif (54), en forme de bande ou de ruban, muni d'un agent adhésif (58) activable,
v) transfert (62, 76) continu de l'agent adhésif (58) de l'élément support d'agent d'adhésif (54) aux surfaces de pièce (4) et/ou le matériau de recouvrement (2) et, ainsi, transfert continu de l'agent adhésif (58) entre le matériau de recouvrement (2) et les surfaces de pièce (4) se déplaçant,
w) activation au moins partielle (46, 48, 50) de l'agent adhésif (58) en un tronçon d'agent adhésif situé à l'avant par rapport à la direction de déplacement,
x) séparation de l'élément support d'agent adhésif en un tronçon d'agent adhésif situé à l'arrière en se référant à la direction de passage, derrière la pièce, respectivement le matériau de recouvrement, et
y) jonction continue (16) du matériau de recouvrement (2) et des surfaces de pièce (4) avec l'agent adhésif (58) situé en position intermédiaire, afin de produire une liaison adhésive entre le matériau de recouvrement (2) et les surfaces de pièce (4).

3. Procédé selon la revendication 1 ou 2,
**caractérisé en ce que** l'agent adhésif (26, 58) est activé (46, 48, 50) avant jonction (16, 60) aux surfaces de pièce (4) .

4. Procédé selon la revendication 1, 2 ou 3,
**caractérisé en ce que** l'agent adhésif (26, 58) est activé (46, 48, 50) pendant la jonction (16, 38, 60) aux surfaces de pièce (4).

5. Procédé selon l'une des revendications 1 à 4,
**caractérisé en ce que** l'agent adhésif (26, 58) est activé (50) après jonction (38, 60) aux surfaces de pièce (4).

6. Procédé selon l'une des revendications 2 à 5,
**caractérisé en ce que** l'agent adhésif (58) est activé avant le transfert (62, 76).

7. Procédé selon l'une des revendications 2 à 6,
**caractérisé en ce que** l'agent adhésif (58) est activé (48, 4) pendant le transfert (62, 76).

8. Procédé selon l'une des revendications 2 à 7,
**caractérisé en ce que** l'agent adhésif (58) est activé après le transfert (62, 76).

9. Procédé selon.la revendication ou 2,
**caractérisé en ce que** l'adhésion de la première face de l'élément adhésif (22) sur la surface de pièce (4) se fait sous l'effet d'une pression (38).

10. Procédé selon la revendication 1,
**caractérisé en ce que** l'adhésion de la deuxième face de l'élément adhésif (22) sur le matériau de recouvrement (2) se fait sous l'effet d'une pression (44).

11. Procédé selon l'une des revendications 2 à 8,
**caractérisé en ce que**, à l'étape (w) est effectuée l'activation de l'agent adhésif (48, 4), sous l'effet d'une pression (38) .

12. Procédé selon la revendication 1,
**caractérisé en ce que**, à l'étape (e), est effectuée la jonction (16) du matériau de recouvrement (2) aux surfaces de pièce (4), sous l'effet d'une pression (44).

13. Procédé selon la revendication 2,
**caractérisé en ce que**, à l'étape (v), est effectué le transfert (62) de l'agent adhésif (58), sous l'effet d'une pression (76).

14. Procédé selon l'une ou plusieurs des revendications précitées,
**caractérisé en ce que** l'activation au moins partielle et/ou complète de l'agent adhésif (26, 58) est effectuée à l'aide d'un moyen et/ou d'un processus et/ou d'une combinaison de ceux-ci,
moyen, processus ou combinaison sélectionné dans un groupe formé de :
- chauffage (48, 50) direct et/ou indirect de l'agent adhésif (26, 58),
- production d'une réaction chimique dans l'agent adhésif (26, 58),
- production d'une réaction chimique de l'agent adhésif (26, 58) avec la pièce d'oeuvre (4, 6),
- passage d'un courant électrique dans l'agent adhésif (26, 58) et/ou l'élément adhésif (22) et/ou l'élément support d'agent adhésif (54).

15. Procédé selon l'une ou plusieurs des revendications précédentes,
**caractérisé par le fait que** les surfaces de pièce d'oeuvre (4), à joindre au matériau de recouvrement (2) avant un contact (38, 76) avec l'agent adhésif (26, 58), sont chauffées (48) et/ou munies d'un agent d'activation d'agent adhésif.

16. Procédé selon la revendication 2 ou 13,
**caractérisé en ce que**, à l'étape v) l'agent adhésif (58) est pratiquement complètement détaché de l'élément support d'agent adhésif (54).

17. Procédé selon la revendication 1 ou 2,
**caractérisé en ce que** les pièces d'oeuvre (6) sont refroidies après l' étape e) ou y).
